# EUROPEAN PATENT APPLICATION

(11) **EP 2 337 353 A1**
(43) Date of publication of application: **22.06.2011**
(21) Application number: 09811247.7
(22) Date of filing: 28.08.2009
(51) Int. Cl.: H04N 7/173, G09G 5/00, H04N 5/44, H04Q 9/00

(54) **CONTROL SYSTEM, VIDEO DISPLAY DEVICE, AND REMOTE CONTROL DEVICE**

(30) Priority: 08.09.2008 US 136472 P; 02.06.2009 JP 2009133431
(71) Applicant: Sharp Kabushiki Kaisha, Osaka-shi, Osaka 545-8522 (JP)
(72) Inventor: KIKUCHI, Emiko, Osaka-shi Osaka 545-8522 (JP); MORIMOTO, Keiu, Osaka-shi Osaka 545-8522 (JP)
(74) Representative: Müller - Hoffmann & Partner
(86) International application number: PCT/JP2009/004191
(87) International publication number: WO 2010/026717

(57) **Abstract**

The invention provides a control system, an image display unit and a remote control device in which a state of the image display unit can be always grasped by using the remote control device while suppressing power consumption.

A television set (an image display unit) 1 detects what kind of image is being displayed, and when the state is changed, the television set 1 transmits state information corresponding to the detected state to a remote control (a remote control device) 2, and the remote control 2 displays the state of the television set 1 in a display section. Furthermore, the television set 1 detects a content of processing executed in external equipment 3 connected thereto and transmits information corresponding to the detected content to the remote control 2, and the remote control 2 displays the content of the processing of the external equipment 3 in the display section. Moreover, the remote control 2 turns off display of the display section in accordance with elapsed time, and when a user performs an arbitrary operation, for example, when a user lifts the remote control 2, the remote control 2 requests the television set 1 for state information and displays an operation situation of the television set 1 or the external equipment 3 in the display section.

## Description

### Technical Field

The present invention relates to a control system for controlling an image display unit by using a remote control device, and more particularly, the present invention relates to a control system, an image display unit and a remote control device for performing control while grasping the state of the image display unit by using the remote control device.

### Background Art

A television set (an image display unit) for displaying images of a television broadcast receives, in many cases, a signal from a remote control (a remote controller or a remote control device) operated by a user so as to be controlled for changing a channel or the like in accordance with the received signal. The television set displays a screen for showing a current state such as a channel currently received, a menu screen and the like, and the user pushes a button on the remote control while checking the screens displayed by the television set, so that a control signal can be transmitted from the remote control to the television set. In such a conventional television set, it is necessary for a user to visually check both the screens of the television set and the remote control for performing an operation.

Each of Patent Documents 1 and 2 describes a technique in which a small display is provided on a remote control, the remote control is capable of two-way communications with equipment to be controlled, such as a television set, and a screen for showing a state of the equipment to be controlled is displayed in the display of the remote control. When this technique is employed, there is no need for a user to check both the screen of the television set and the remote control but the television set can be operated while checking the display of the remote control alone, and hence, the television set can be more easily operated. Alternatively, Patent Document 3 describes a technique in which a remote control is capable of receiving a signal for a prescribed period of time after transmitting a signal from the remote control to equipment to be controlled and when a signal is transmitted from the equipment to be controlled to the remote control, information in accordance with the signal is displayed in a display of the remote control. According to this technique, since a time when the remote control waits for a signal is restricted, the power consumption in the remote control can be reduced.

### Prior Art Documents

### Patent Documents

Patent Document 1: Japanese Patent Application Laid-Open No. 2002-291067
Patent Document 2: Japanese Patent Application Laid-Open No. 2003-333362
Patent Document 3: Japanese Patent Application Laid-Open No. 1-119197 (1989)

### Disclosure of the Invention

### Problems to be Solved by the Invention

According to the technique described in each of Patent Documents 1 and 2, it is necessary to always perform communications between the remote control and the television set for displaying the state of the television set in the display of the remote control, and hence, there arises a problem that the power consumed in the remote control is large. Alternatively, according to the technique described in Patent Document 3, although the power consumption in the remote control can be suppressed, the remote control can receive a signal from the television set merely in the prescribed time after transmitting a signal, and hence, when the state of the television set is changed after the prescribed time has elapsed, there arises a problem that the remote control can not grasp the state of the television set.

The present invention is devised in consideration of these circumstances, and an object of the invention is providing a control system, an image display unit and a remote control device in which a state of the image display unit can be always grasped by using the remote control device while suppressing the power consumption in the remote control device by transmitting information corresponding to the state of the image display unit to the remote control device from the image display unit when necessary.

### Means for Solving the Problems

The control system of this invention includes an image display unit; and a remote control device for accepting an operation for controlling an operation of the image display unit and for transmitting a control signal to the image display unit, the image display unit and the remote control device being capable of performing two-way communications. In the control system, the image display unit includes: detecting means for detecting what kind of image is being displayed; and means for transmitting state information corresponding to the state thereof to the remote control device when the state detected by the detecting means is changed; and the remote control device includes: a display section; and means for displaying, when the state information is received from the image display unit, the state of the image display unit corresponding to the received state information in the display section.

In the control system of this invention, the remote control device further includes: means for reducing power supplied to the display section of the remote control device in accordance with elapsed time; waiting means for waiting for an arbitrary operation in a condition where the power supplied to the display section is reduced; means for transmitting, when the waiting means accepts the arbitrary operation, a request for state information corresponding to a state of the image display unit to the image display unit; and means for restoring the power supplied to the display section; and the image display unit further includes: means for transmitting, when the request for the state information is received from the remote control device, the state information corresponding to the state of the image display unit to the remote control device.

In the control system of this invention, the remote control device further includes: means for displaying, in the display section, an operation screen for accepting an operation in accordance with the state of the image display unit corresponding to the state information received from the image display unit.

In the control system of this invention, the image display unit is connectable to external equipment, and the display unit further includes: detecting means for detecting a content of processing executed in the connected external equipment; and means for transmitting, to the remote control device, information corresponding to the content of the processing of the external equipment detected by the detecting means; and the remote control device further includes: means for displaying, in the display section, the content of the processing of the external equipment corresponding to the information received from the image display unit.

In the control system of this invention, the remote control device further includes: means for accepting an operation for controlling an operation of the external equipment; means for displaying, in the display section, an operation screen for accepting an operation in accordance with the content of the processing of the external equipment corresponding to the information received from the image display unit; and means for transmitting, to the image display unit, a control signal for controlling the operation of the external equipment in accordance with the accepted operation; and the image display unit further includes: means for controlling the operation of the external equipment in accordance with the received control signal.

The image display unit of this invention, capable of performing two-way communications with an external, for receiving a control signal from the external and for controlling an operation thereof in accordance with the received control signal, includes: state detecting means for detecting what kind of image is being displayed; and means for transmitting state information corresponding to the state detected by the state detecting means to the external when the state detected by the state detecting means is changed.

The image display unit of this invention further includes: means for receiving a request for state information from the external; and means for transmitting, to the external, state information corresponding to the state detected by the state detecting means when the request for the state information is received.

In the image display unit of this invention, the image display unit is connectable to external equipment, and the image display unit further includes: detecting means for detecting a content of processing executed in the connected external equipment; and means for transmitting information corresponding to the content of the processing of the external equipment detected by the detecting means.

The image display unit of this invention further includes means for receiving broadcasts; and means for accepting input of image data from the external. In the image display unit, the state detecting means detects whether or not an obtaining image based on a received broadcast is being displayed, which channel of the broadcasts the displayed image is based on, which program of the broadcasts the displayed image is based on, or whether or not an obtaining image based on externally input data is being displayed.

The remote control device of this invention, capable of performing two-way communications with an external unit for displaying images, for accepting an operation for controlling an operation of the external unit and for transmitting a control signal to the external unit, includes: a display section; receiving means for receiving state information corresponding to a state of the external unit of what kind of image the external unit is displaying; and means for displaying, in the display section, the state of the external unit corresponding to the received state information when the receiving means receives the state information.

The remote control device of this invention further includes: means for reducing power supplied to the display section in accordance with elapsed time; waiting means for waiting for an arbitrary operation in a condition where the power supplied to the display section is reduced; means for transmitting a request for state information to the external unit when the waiting means accepts the arbitrary operation; and means for restoring the power supplied to the display section.

The remote control device of this invention further includes a variation sensor for detecting variation thereof. In the remote control device, the waiting means determines that the arbitrary operation is accepted when the variation sensor detects variation of a prescribed amount or more.

The remote control device of this invention further includes a contact sensor for detecting a contact thereto by a user. In the remote device, the waiting means determines that the arbitrary operation is accepted when the contact sensor detects a contact.

The remote control device of this invention further includes means for displaying, in the display section, an operation screen for accepting an operation in accordance with the state of the external unit corresponding to the received state information.

The remote control device of this invention further includes: means for receiving, from the external unit, information corresponding to a content of processing executed in a second equipment connected to the external unit; and means for displaying, in the display section, the content of the processing of the second equipment corresponding to the received information.

The remote control device of this invention further includes: means for accepting an operation for controlling an operation of the second equipment; means for displaying, in the display section, an operation screen for accepting an operation in accordance with the content of the processing of the second equipment corresponding to the information received from the external unit; and means for transmitting, to the external unit, a control signal for controlling the operation of the second equipment in accordance with the accepted operation.

According to the present invention, the image display unit is capable of displaying a plurality of kinds of images such as obtaining images based on any of a plurality of kinds of image sources including received broadcast signals, externally input image signals or the like, obtaining images based on an electric program guide or dual screen images for simultaneously displaying two images. The image display unit detects, at any time, which kind of image is being currently displayed, and when the detected state is changed, the image display unit transmits state information corresponding to the detected state to the remote control device. The remote control device displays, in the display section, the state of the image display unit corresponding to the state information, and thus, the update state of the image display unit is always displayed in the display section.

Furthermore, according to the present invention, the remote control device reduces the power supplied to the display section when a prescribed time has elapsed after a specific point of time such as a time point when the display is updated last or a time point when an operation is accepted last. When the remote control device accepts an arbitrary operation from a user in a condition where the power supplied to the display section reduced, the remote control device transmits a request for the state information to the image display unit. Thus, the remote control device reduces the power consumption in the display section as well as displays, in the display section, the state of the image display unit when necessary.

Moreover, according to the present invention, the remote control device displays, in the display section, an operation screen for accepting an operation in accordance with the state of the image display unit on the basis of the state information, and thus, an operation screen for performing control in accordance with the current state of the image display unit can be displayed.

Furthermore, according to the present invention, the image display unit detects a content of processing executed in external equipment such as a TV recorder connected to the image display unit and transmits information corresponding to the content of the processing of the external equipment to the remote control device. The remote control device displays, in the display section, the content of the processing of the external equipment corresponding to the information. Thus, the update state of the external equipment can be displayed in the display section of the remote control device.

Moreover, according to the present invention, the remote control device displays, in the display section, an operation screen for accepting an operation in accordance with the content of the processing of the external equipment, and the image display unit controls the operation of the external equipment in accordance with the accepted operation. Since an operation screen with content in accordance with the current state of the external equipment is displayed, appropriate control proper to the current situation can be executed.

Furthermore, according to the present invention, as the state of the image display unit to be detected by the image display unit, it is detected whether or not an obtaining image based on a received broadcast is being displayed, which channel the displayed image is based on, which program the displayed image is based on, or whether or not an obtaining image based on externally input image data is being displayed, and the contents of these states can be grasped by using the remote control device.

Moreover, according to the present invention, the remote control device determines that an operation performed by a user is accepted when the variation sensor for detecting variation such as vibration of the remote control device detects variation of a prescribed amount or more, and hence, when, for example, a user lifts, taps or shakes the remote control device, the remote control device transmits a request for the state information to the image display unit.

Also, according to the present invention, the remote control device determines that an operation performed by a user is accepted when the contact sensor detects a contact to the remote control device by the user, and hence, when the user holds the remote control device with his/her hand, the remote control device transmits a request for the state information to the image display unit.

### Effects of the Invention

According to the present invention, the image display unit transmits the state information to the remote control device when the state of the image display unit is changed instead of always performing communications between the image display unit and the remote control device; therefore, every time the state of the image display unit is changed, the state of the image display unit is displayed in the remote control device. Accordingly, in employing the control system of the invention, a user can always grasp the state of the image display unit changing every moment by using the remote control device while suppressing necessary power consumption, and thus, the present invention exhibits excellent effects.

### Brief Description of Drawings

FIG. 1 is a conceptual diagram that illustrates the appearance of a control system of this invention.
FIG. 2 is a block diagram that illustrates the internal configuration of a television set, that is, an image display unit of this invention.
FIG. 3 is a block diagram that illustrates the internal configuration of a remote control, that is, a remote control device of this invention.
FIG. 4 is a flowchart that illustrates procedures in processing for displaying a detected state of the television set in the remote control.
FIG. 5A is a schematic diagram that illustrates an exemplary screen displayed in a display section of the remote control.
FIG. 5B is a schematic diagram that illustrates another exemplary screen displayed in the display section of the remote control.
FIG. 5C is a schematic diagram that illustrates a still another exemplary screen displayed in the display section of the remote control.
FIG. 6 is a flowchart that illustrates procedures in processing for requesting state information by the remote control and displaying a state of the television set.

### Description of Reference Numerals

- 1: television set (image display unit)
- 101: control section
- 102: tuner section
- 112: interface section
- 113: external equipment managing section
- 114: transmitting section
- 115: receiving section
- 2: remote control (remote control device)
- 21: control section
- 22: operation section
- 221: touch panel
- 222: input button section
- 24: receiving section
- 25: transmitting section
- 27: display section
- 28: pressure sensor
- 29: vibration sensor
- 3: external equipment

### Best Mode for Carrying Out the Invention

The present invention will now be described in detail with reference to the accompanying drawings illustrating an embodiment thereof.

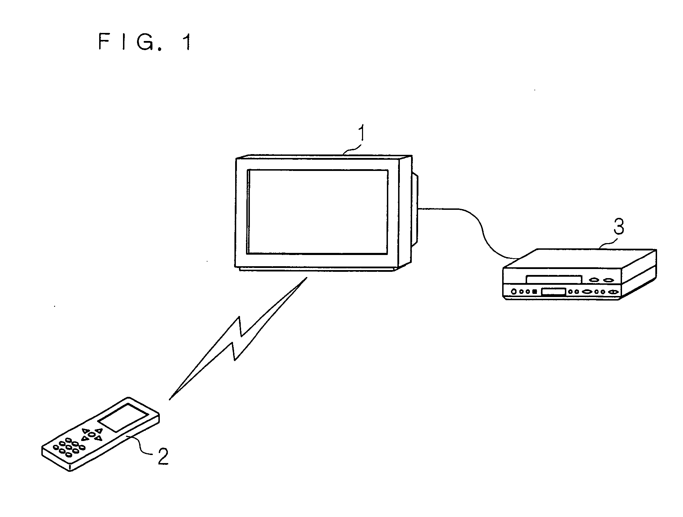

FIG. 1 is a conceptual diagram that illustrates the appearance of a control system of this invention. The control system of this invention includes a television set 1, that is, an image display unit of this invention, and a remote control (a remote control device) 2 that accepts an operation performed by a user and transmits, to the television set 1, a control signal in accordance with the accepted operation. The television set 1 receives television broadcasts and displays obtaining images based on the received broadcasts. It is possible to perform two-way wireless communications between the television set 1 and the remote control 2, and the television set 1 performs control in accordance with a control signal transmitted from the remote control 2. Furthermore, the television set 1 can connect to external equipment 3 such as a TV recorder or a tuner, and the remote control 2 can transmit, to the television set 1, a control signal for controlling the operation of the external equipment 3, and the television set 1 can control the external equipment 3 in accordance with the control signal transmitted from the remote control 2.

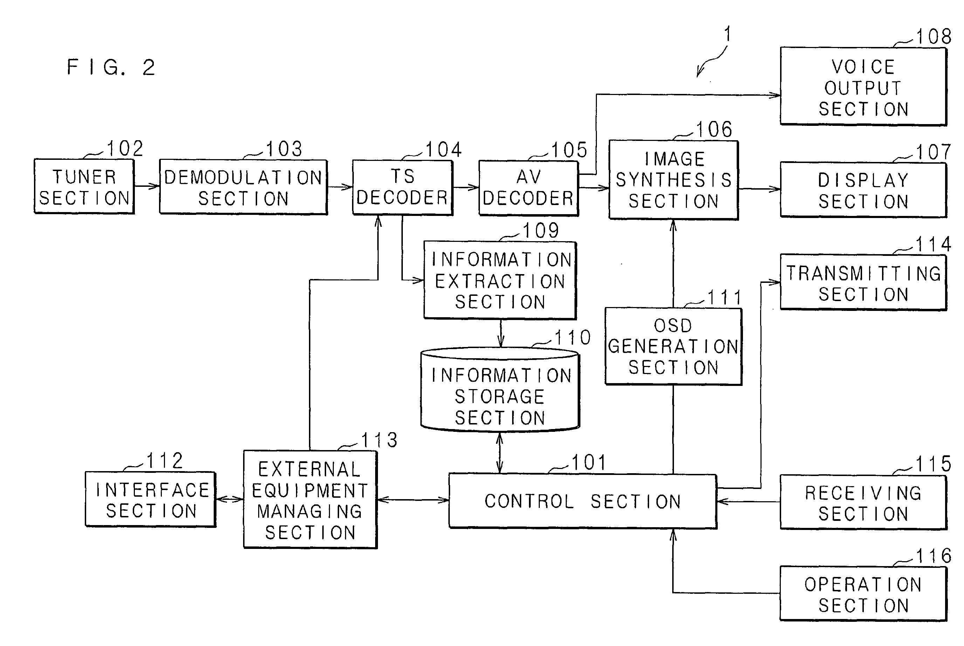

FIG. 2 is a block diagram that illustrates the internal configuration of the television set 1, that is, the image display unit of this invention. The television set 1 comprises an arithmetic section for performing an arithmetic operation, a RAM for storing information related to the arithmetic operation, a ROM for storing a program necessary for the arithmetic operation and the like, and includes a control section 101 for controlling operations of respective sections of the television set 1. The television set 1 further includes a tuner section 102, a demodulation section 103 and a TS (Transport Stream) decoder 104. The tuner section 102 connects to an antenna, a signal line of a wired broadcast or the like not shown, so as to receive broadcast signals of digital broadcast through the antenna or the signal line and to convert broadcast signals of a selected channel, namely, of a specific frequency band, into data signals. The demodulation section 103 generates TS data of the selected channel from the data signals having been converted by the tuner section 102. The TS decoder 104 separates the TS data into various kinds of TS data such as TS data including data for images or TS data including various information.

The TS decoder 104 connects to an AV (Audio Visual) decoder 105 and an information extraction section 109. The AV decoder 105 generates, from the TS data including data for images and data for voices, image data and voice data corresponding to images and voices of a program broadcasted on the selected channel. Furthermore, the AV decoder 105 executes necessary processing such as decoding during the processing for generating the image data and the voice data. The information extraction section 109 extracts, from the TS data, various information such as data for an EPG (Electric Program Guide), information corresponding to the channel currently received and information of the name of a program currently received. The information extraction section 109 connects to an information storage section 110 including a memory. The information storage section 110 stores various information extracted by the information extraction section 109. Furthermore, the information storage section 110 connects to the control section 101. The control section 101 executes processing for reading the stored information from the information storage section 110.

The control section 101 connects to an OSD (On Screen Display) generation section 111. The control section 101 inputs, if necessary, the information read from the information storage section 110 to the OSD generation section 111, and the OSD generation section 111 generates OSD images for displaying the content of the input information as OSD. The AV decoder 105 and the OSD generation section 111 connect to an image synthesis section 106. The image synthesis section 106 executes processing for synthesizing an obtaining image based on the image data generated by the AV decoder 105 and an OSD image generated by the OSD generation section 111. The image synthesis section 106 connects to a display section 107 for displaying images by using a liquid crystal panel an EL (Electro-Luminescence) panel, a plasma display panel or the like. The image synthesis section 106 inputs an image signal corresponding to a synthesized signal to the display section 107, and the display section 107 displays an obtaining image based on the image signal. In this manner, images of a broadcasted program are displayed in the display section 107. Furthermore, the AV decoder 105 connects to a voice output section 108 such as a loudspeaker. The voice output section 108 outputs obtaining voice based on a voice signal generated by the AV decoder 105.

The television set 1 further includes an interface section 112 for connection with the external equipment 3 such as a TV recorder or a tuner. The interface section 112 is constructed by using an interface such as an HDMI (High Definition Multimedia Interface) or an iLink. The interface section 112 connects to the external equipment 3 through a cable so as to transmit/receive TS data and control signals to/from the external equipment 3. Generally, the interface section 112 is connectable to a plurality of external equipment 3. Additionally, the interface section 112 may include a plurality of kinds of interfaces.

The interface section 112 connects to an external equipment managing section 113 for executing processing for managing a state of the external equipment 3. The external equipment managing section 113 connects to the control section 101 and the TS decoder 104, inputs the TS data included in data received from the external equipment 3 by the interface section 112 to the TS decoder 104 and inputs control signals to the control section 101. The TS decoder 104 also executes, on the data input from the external equipment managing section 113, processing similar to that executed on the data input from the demodulation section 103. As a result, the display section 107 can display images input from the external equipment 3. Furthermore, the control section 101 executes processing for transmitting/receiving control signals to/from the external equipment 3 through the interface section 112 and the external equipment managing section 113. Also, the external equipment managing section 113 includes a memory for storing information on the external equipment 3.

Moreover, the control section 101 connects to a transmitting section 114 and a receiving section 115 for transmitting/receiving information to/from the remote control 2 by a wireless communication method such as Bluetooth. The control section 101 executes processing for transmitting information to the remote control 2 by using the transmitting section 114 and receives information from the remote control 2 by using the receiving section 115. The television set 1 performs the two-way communications with the remote control 2 by using the transmitting section 114 and the receiving section 115. Furthermore, the control section 101 connects to an operation section 116 including various input buttons for accepting an operation performed by a user. When the user operates the operation section 116, the control section 101 accepts, from a user, various instructions of, for example, turning on/off the power, changing a channel or switching external equipment 3 to which data is inputted.

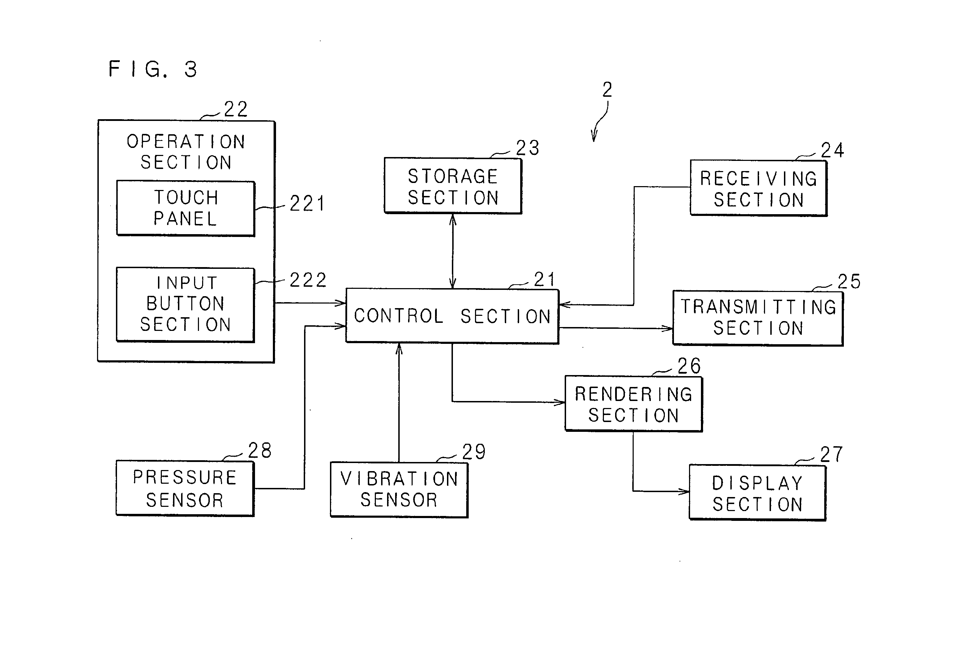

FIG. 3 is a block diagram that illustrates the internal configuration of the remote control 2, that is, the remote control device of this invention. The remote control 2 includes a control section 21 for controlling operations of respective sections of the remote control 2, an operation section 22 for accepting an operation performed by a user and a display section 27 constructed by a liquid crystal panel, an EL panel or the like. The control section 21 comprises an arithmetic section for performing an arithmetic operation, a RAM for storing information related to the arithmetic operation, a ROM for storing a program necessary for the arithmetic operation and the like. The operation section 22 includes a touch panel 221 provided over the display section 27 and an input button section 222 including a plurality of input buttons such as numeric keys and a cursor key. The control section 21 connects to a storage section 23 for storing information necessary for displaying images in the display section 27 and a rendering section 26 for executing processing for displaying images in the display section 27. The storage section 23 stores, for example, image data for generating a partial image corresponding to a part of an image to be displayed in the display section 27. The control section 21 reads necessary information from the storage section 23 and executes processing for causing the rendering section 26 to execute the processing for displaying, in the display section 27, an obtaining image based on the read information.

Furthermore, the control section 21 connects to a transmitting section 25 and a receiving section 24 for transmitting/receiving information to/from the television set 1 by the wireless communication method. The transmitting section 114 of the television set 1 transmits a signal to the receiving section 24, and the transmitting section 25 transmits a signal to the receiving section 115 of the television set 1. The control section 21 executes processing for transmitting a control signal to the television set 1 by using the transmitting section 25 in accordance with an operation accepted in the operation section 22 and processing for receiving information transmitted from the television set 1 by using the receiving section 24.

Moreover, the control section 21 connects to a pressure sensor 28 for detecting a pressure applied to the remote control 2 and a vibration sensor 29 for detecting vibration of the remote control 2. The pressure sensor 28 is an example of a contact sensor of this invention, and the vibration sensor 29 is an example of a variation sensor of this invention. When the pressure sensor 28 detects a pressure of a precedently determined prescribed value or more, the pressure sensor 28 inputs a signal corresponding to detection of the pressure to the control section 21. The pressure sensor 28 is provided in such a position on a side face of the remote control 2 that a pressure is applied when a user holds the remote control 2 with his/her hand. When a user holds the remote control 2 with his/her hand, the pressure sensor 28 detects a contact with the hand of the user by detecting the pressure; therefore, the control section 21 can detect an operation, performed by the user, to hold the remote control 2 with his/her hand. When the vibration sensor 29 detects vibration of a precedently determined prescribed value or more, the vibration sensor 29 inputs a signal corresponding to the detection of the vibration to the control section 21. When a user performs an operation to, for example, lift the remote control 2, vibration occurs in the remote control 2, and hence, the vibration sensor 29 detects the vibration. Accordingly, the vibration sensor 29 detects variation in the position or the posture of the remote control 2 derived from an operation performed by a user by detecting vibration, and hence, the control section 21 can detect the operation performed by the user.

The television set 1 having the aforementioned configuration can display, in the display section 107, obtaining images based on a plurality of kinds of image sources. For example, the television set 1 is capable of displaying obtaining images based on broadcast signals received by the tuner section 102 and obtaining images based on data input to the interface section 112 from the external equipment 3 such as a TV recorder. Moreover, in accordance with the configuration and the operation setting of the tuner section 102, the television set 1 is not only capable of displaying obtaining images based on a plurality of kinds of broadcasts such as ground wave broadcast and various satellite broadcast, but is also capable of receiving broadcasts of a plurality of channels with respect to each of the various kinds of broadcasts and displaying images of the received broadcasts. Furthermore, the television set 1 is capable of executing processing for displaying the EPG in the display section 107 on the basis of data for the EPG extracted by the information extraction section 109, and processing of a picture mode for successively displaying, in the display section 107, a plurality of obtaining images based on image data precedently stored in the information storage section 110 or the like. The television set 1 is also capable of displaying dual screen images for simultaneously displaying arbitrary two images. According to this invention, the television set 1 detects a current state thereof, that is, which kind of image out of the aforementioned plural kinds of images is being displayed, specifically, which kind of image source out of the aforementioned plural image sources the displayed image is based on. The television set 1 of this invention always detects the state of the television set 1, and when the detected state is changed, the television set 1 executes processing for transmitting information corresponding to the state thereof to the remote control 2, and the remote control 2 executes processing for displaying the state of the television set 1 on the basis of the information received from the television set 1.

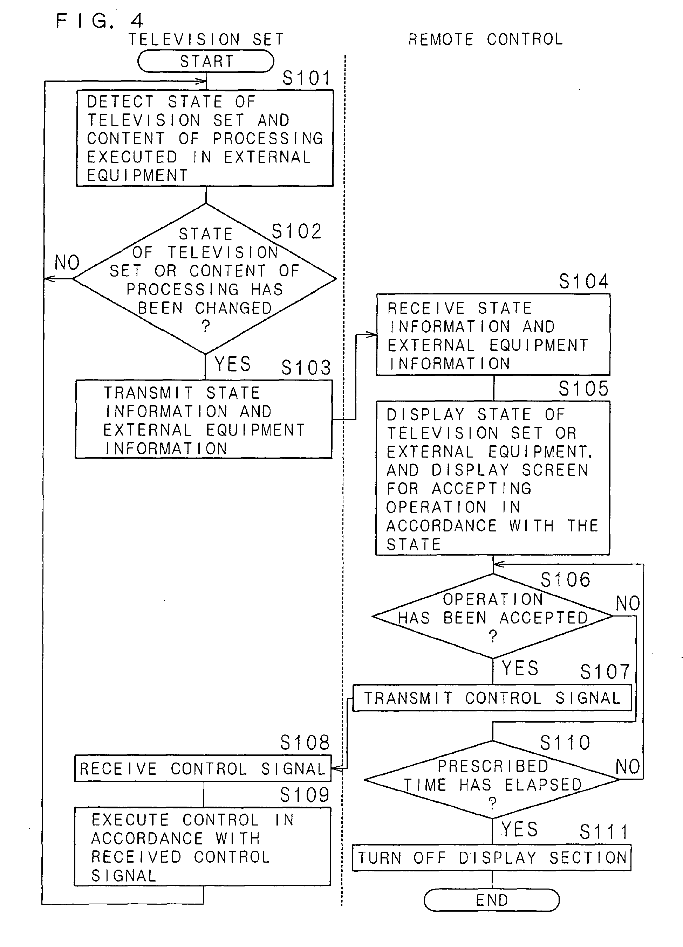

FIG. 4 is a flowchart that illustrates procedures in the processing for displaying the detected state of the television set 1 in the remote control 2. The control section 101 detects, at any time, the state of the television set, that is, which kind of images are being displayed, and further detects the content of processing executed in the external equipment 3 such as the TV recorder or the tuner connected to the interface section 112 (S101). If the external equipment 3 does not connect in detecting the state of the television set 1 in step S101, the control section 101 does not execute the processing for detecting the content of the operation of the external equipment 3. The control section 101 or a memory not shown stores information corresponding to the respective kinds of images, for example, information of which image source is used for obtaining images, in executing processing for changing the kind of images, such as processing for changing the image source by changing the kind of broadcast or by changing the channel, processing for starting the picture mode or processing for starting displaying dual screen images. The control section 101 detects, in step S101, the state of the television set 1, that is, what kind of image is being displayed by reading this information. Furthermore, in step S101, the control section 101 transmits an inquiry instruction for the content of processing executed in the external equipment 3 from the interface section 112 to the external equipment 3, and detects the content of the processing executed in the external equipment 3 by inputting information corresponding to the state of the external equipment 3 to the interface section 112 from the external equipment 3. The content of the processing executed in the external equipment 3 that can be detected at this point is, for example, a channel of a broadcast received by the tuner corresponding to the external equipment 3 or the content of processing such as a reproducing or recording operation performed by the TV recorder corresponding to the external equipment 3. Incidentally, every time the content of the operation performed in the external equipment 3 is changed, the external equipment 3 may transmit information corresponding to the content of the operation and the external equipment managing section 113 may store the information transmitted from the external equipment 3, so that the control section 101 may detect the state of the external equipment 3 by reading the information stored in the external equipment managing section 113. Furthermore, in the case where a plurality of external equipment 3 connect to the interface section 112, the control section 101 detects the content of the processing executed in each external equipment 3.

The control section 101 stores information corresponding to the detected state of the television set 1 and the content of the processing executed in the external equipment 3, and compares the information with information detected and stored in the last session, so as to determine whether or not the state of the television set 1 or the content of the processing executed in the external equipment 3 has been changed (S102). When the state of the television set 1 or the content of the processing has not been changed (i.e., NO in S102), the control section 101 returns the processing to step S101. When the state of the television set 1 or the content of the processing has been changed (i.e., YES in S102), the control section 101 causes the transmitting section 114 to transmit state information corresponding to the detected state of the television set 1 and external equipment information corresponding to the content of the processing executed in the external equipment 3 to the remote control 2 (S103). When the content of the processing executed in the external equipment 3 is not detected, the control section 101 does not execute the processing for transmitting the external equipment information in step S103.

The remote control 2 receives the state information and the external equipment information transmitted from the television set 1 by using the receiving section 24 (S104). The control section 21 displays the state of the television set 1 or the external equipment 3 on the basis of the state information and the external equipment information thus received, and executes processing for displaying, in the display section 27, a screen for accepting an operation for controlling the television set 1 or the external equipment 3 in accordance with the state of the television set 1 or the external equipment 3 (S105). In step S105, the control section 21 reads image data corresponding to the contents of the received state information and external equipment information from the storage section 23, and causes the rendering section 26 to execute processing for displaying, in the display section 27, a screen including an image showing, with characters and the like, the state of the television set 1 corresponding to the state information or the content of the processing executed in the external equipment 3 corresponding to the external equipment information. For instance, when the television set 1 is in a state for displaying obtaining images based on a broadcast, the television set 1 displays a screen for showing a channel currently received, the name of the program currently received and the like is displayed. Alternatively, when the TV recorder corresponding to the external equipment 3 is executing reproducing processing and the television set 1 is displaying obtaining images based on data input from the TV recorder, it is displayed that the TV recorder is performing a reproducing operation and an operation screen including an operation menu for controlling the TV recorder is further displayed.

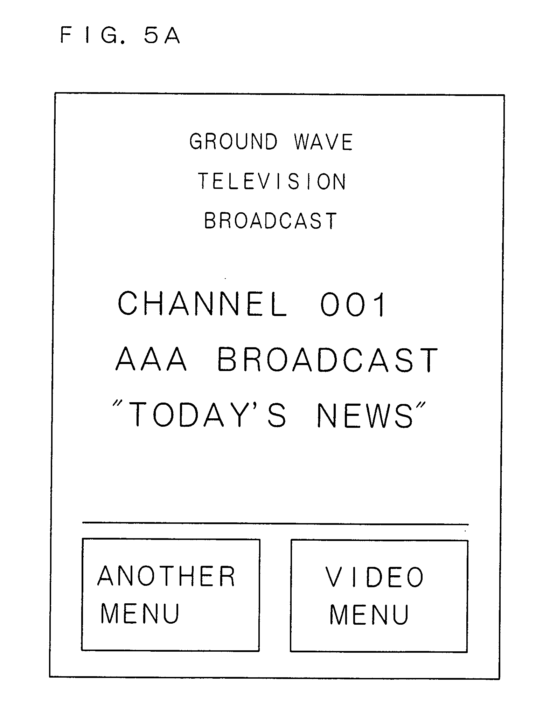

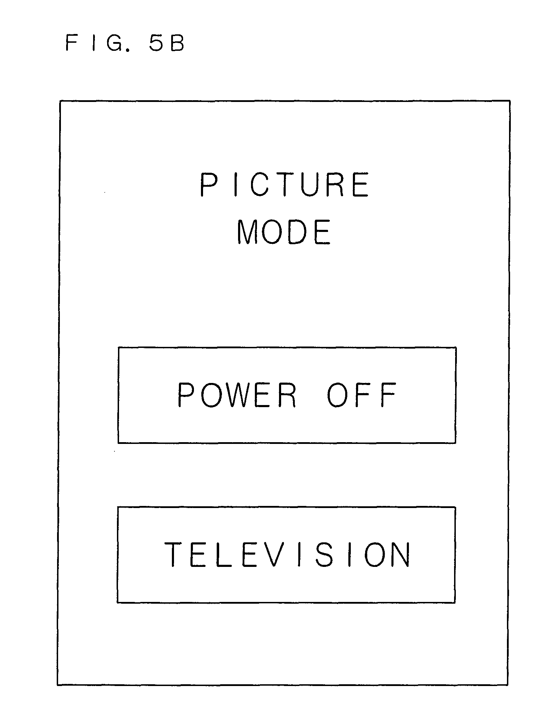

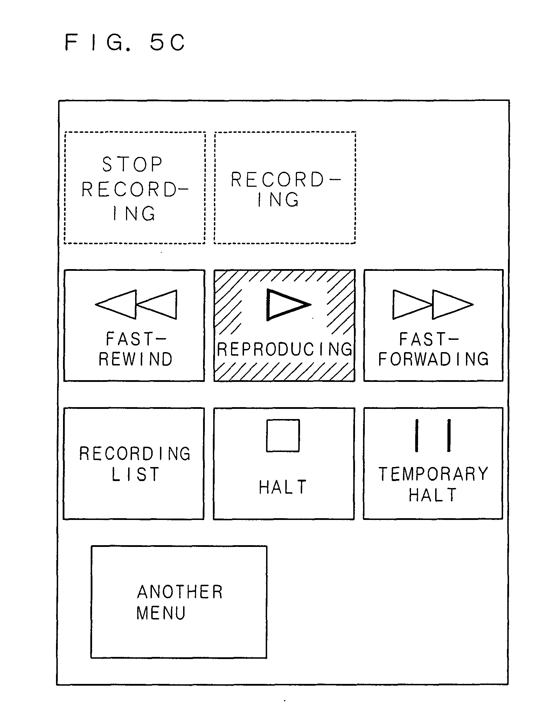

FIGS. 5 are schematic diagrams that illustrate exemplary screens displayed in the display section 27 of the remote control 2. FIG. 5A illustrates an exemplary screen to be displayed when the television set 1 is in a state for displaying obtaining images based on a broadcast and also the TV recorder as the external equipment 3 is connected. In the exemplary screen of FIG. 5A, the kind of currently received broadcast, the channel of the broadcast, the name of a broadcasting station and the name of a program are displayed as the state of the television set 1. The exemplary screen of FIG. 5A shows that the television set 1 is displaying images of a broadcast, and specifically, shows that the kind of received broadcast is a "GROUND WAVE TELEVISION BROADCAST", that the channel is "CHANNEL 001", that the name of the broadcasting station is "AAA BROADCAST" and that the name of the program is "TODAY'S NEWS". In the exemplary screen of FIG. 5A, an operation-button "ANOTHER MENU" to be used for calling an operation menu for controlling the television set 1 and an operation button "VIDEO MENU" for calling an operation menu for controlling the TV recorder corresponding to the external unit are also displayed. When a user operates the button "ANOTHER MENU" or "VIDEO MENU" by using the touch panel 221, the control section 21 executes processing for displaying the corresponding operation menu in the display section 27.

FIG. 5B illustrates an exemplary screen displayed when the television set 1 is executing processing of the picture mode. The exemplary screen of FIG. 5B shows that the television set 1 is currently executing the processing of the picture mode. In the picture mode, the television set 1 is in a state for displaying images on the basis of image data precedently stored therein, and hence, during the processing of the picture mode, the television set 1 displays neither images of a received program nor images reproduced by the TV recorder. Furthermore, the exemplary screen of FIG. 5B displays an operation button "POWER OFF" for turning off the power of the television set 1 and an operation button "TELEVISION" for terminating the processing of the picture mode and starting processing for displaying images of a television broadcast. A user can perform an operation for controlling the television set 1 by touching either of the operation button "POWER OFF' or the operation button "TELEVISION" by using the touch panel 221.

FIG. 5C illustrates an exemplary screen displayed when the TV recorder corresponding to the external equipment 3 is executing reproducing processing and the television set 1 is displaying obtaining images based on data input from the TV recorder. In the exemplary screen of FIG. 5C, an operation menu for controlling the TV recorder is displayed, and since an item "REPRODUCING" is highlighted, the exemplary screen of FIG. 5C shows that the TV recorder corresponding to the external equipment 3 is executing reproducing processing. Furthermore, since "RECORDING" and "STOP RECORDING" processing can not be executed during the reproducing processing, menu items "RECORDING" and "STOP RECORDING" are in a non-display state for clearly informing this situation. In this manner, the control section 21 displays, in the display section 27, not only the state of the television set 1 corresponding to the state information and the content of the processing executed in the external equipment 3 corresponding to the external equipment information but also an operation screen for accepting an operation in accordance with the state of the television set 1 and the content of the processing executed in the external equipment 3. In FIGS. 5, the control section 21 of the remote control 2 displays an operation screen including a menu for performing control executable in the current condition based on the state information or the external equipment information.

The screens illustrated in FIGS. 5 are merely examples and another screen can be displayed in the display section 27 of the remote control 2 on the basis of the state information or the external equipment information. For instance, when the TV recorder is executing fast-forwarding processing, a screen in which an item "FAST-FORWARDING" is highlighted is displayed. Alternatively, when the television set 1 is in a state for displaying images of a broadcast received by the tuner corresponding to the external equipment 3, the display section 27 of the remote control 2 displays the kind, the channel and the like of the broadcast received by the tuner. Further alternatively, when the television set 1 is connectable to a communication network such as the Internet not shown and the television set 1 is in a state for displaying obtaining images based on downloaded data through the communication network, a screen showing that the television set 1 is in a state for displaying the downloaded images is displayed in the display section 27 of the remote control 2.

Next, the control section 21 waits for an operation performed by a user, who has visually checked the operation screen, in the operation section 22 by touching the touch panel 221 or pushing any input button of the input button section 222 (S106). The operation accepted in step S106 is an operation for controlling the operation of the television set 1 or the external equipment 3. When the operation performed by the user in the operation section 22 has been accepted (i.e., YES in S106), the control section 21 causes the transmitting section 25 to transmit, to the television set 1, a control signal in accordance with the accepted operation (S107). The control signal transmitted in step S107 controls the operation of the television set 1 or the external equipment 3 in accordance with the operation accepted in step S106. For example, the control signal transmitted in step S107 instructs change of the channel, halt of the reproducing processing of the TV recorder or the like.

The television set 1 receives the control signal transmitted from the remote control 2 by using the receiving section 115 (S108), and the control section 101 executes the control of the television set 1 or the external equipment 3 in accordance with the received control signal (S109). When the control signal is one for controlling the operation of the television set 1, the control section 101 controls operations of the respective sections of the television set 1 in accordance with the control signal in step S109. Specifically, when the control signal is, for example, one for instructing the change of the channel, the control section 101 executes processing for changing tuning of the channel for acquiring broadcast signals by the tuner section 102. Alternatively, when the control signal is one for controlling the operation of the external equipment 3, the control section 101 transmits a control signal for controlling the operation of the external equipment 3 in accordance with the received control signal to the external equipment 3 through the external equipment managing section 113 and the interface section 112 in step S109. After completing the procedure of step S109, the control section 101 returns the processing to step S101. Generally, after executing the control in step S109, the state of the television set 1 or the external equipment 3 has been changed, and hence, the procedures of steps S101 through S105 are executed so that the result of the control can be displayed in the display section 27 of the remote control 2.

When the operation performed by a user has not been accepted in step S106 (i.e., NO in S106), the control section 21 measures elapsed time after the display of the screen in the display section 27 in step S105 and determines whether or not a prescribed time has elapsed after the display (S110). Additionally, the control section 21 may measure elapsed time after another point of time such as elapsed time after the receipt of the information in step S104. When the prescribed time has not elapsed (i.e., NO in S110), the control section 21 returns the processing to step S106, so as to continuously wait for an operation. When the prescribed time has elapsed (i.e., YES in S110), the control section 21 executes processing for turning off the image display in the display section 27 by reducing power to be supplied to the display section 27 from a power source not shown (S111), and the control section 21 completes the processing. The television set 1 repeats the processing from step S101 as needed. In step S111, since the supplied power is reduced, a display device or a backlight of the display section 27 stops emitting light, and hence, the image display in the display section 27 turns off. Additionally, the control section 21 may execute processing for dimming the display section 27 instead of the processing for completely turning off the display section 27.

According to the invention, through the aforementioned procedures, the television set 1 detects what kind of image is being displayed, for example, which kind of image source the displayed image is based on, and when the detected state is changed, the television set 1 transmits the state information corresponding to the state thereof to the remote control 2. The remote control 2 displays the state of the television set 1 corresponding to the state information in the display section 27. The display section 27 of the remote control 2 always displays the update state of the television set 1, so that a user can check the current state of the television set 1. Even when the state of the television set 1 is changed due to another factor other than the control performed by using the remote control 2, such as when the channel is changed as a result of accepting an operation performed by a user in the operation section 116 or when one program has been completed and a new program has started, the user can grasp the state of the television set 1 by using the remote control 2. Furthermore, the television set 1 similarly detects the content of the processing executed in the external equipment 3 such as the TV recorder connected to the television set 1, and when the detected state is changed, the television set 1 transmits the external equipment information corresponding to the content of the processing executed in the external equipment 3 to the remote control 2. The remote control 2 displays the content of the processing executed in the external equipment 3 in the display section 27. The display section 27 of the remote control 2 always displays the update content of the processing executed in the external equipment 3, so that a user can check the current operation situation of the external equipment 3.

Furthermore, the remote control 2 displays, in the display section 27, the operation screen for accepting an operation for controlling the television set 1 or the external equipment 3 in accordance with the state information or the external equipment information, and the television set 1 controls the operation of the television set 1 or the external equipment 3 in accordance with an operation accepted in the remote control 2. The operation screen displayed in the remote control 2 is one in accordance with the detected state of the television set 1 or the detected content of the processing executed in the external equipment 3. Since the operation screen with a content in accordance with the current situation of the television set 1 and the external equipment 3 is displayed, an operation executable in accordance with the current situation is displayed, and hence, a user can input an appropriate control instruction by easily selecting an operation proper to the situation.

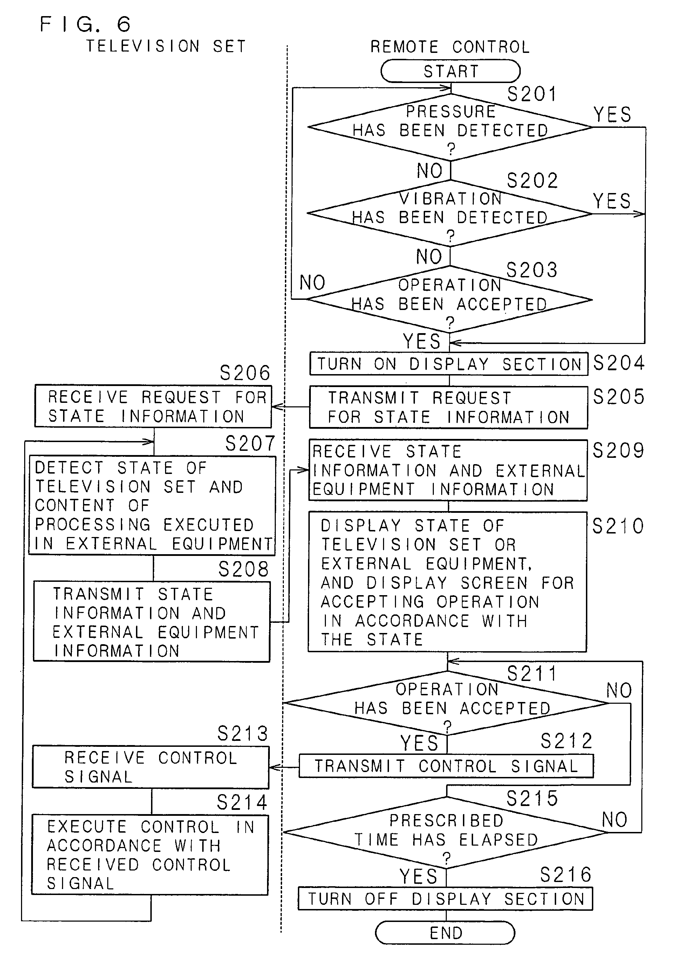

When the remote control 2 in which the display section 27 has been turned off is operated by a user subsequently, the remote control 2 requests the television set 1 for the state information and executes the processing for displaying the state of the television set 1 on the basis of the acquired state information. FIG. 6 is a flowchart that illustrates procedures in the processing for requesting the state information by the remote control 2 and displaying the state of the television set 1. The control section 21 of the remote control 2 waits for detection of a pressure with the pressure sensor 28 while the display section 27 is in an off state (S201). When the pressure sensor 28 detects a pressure of a prescribed value or more, the pressure sensor 28 inputs a signal corresponding to the detection of the pressure to the control section 21, and in step S201, the control section 21 determines that the pressure sensor 28 has detected a pressure when the signal is input from the pressure sensor 28. Since the pressure sensor 28 is provided in a position to which a pressure is applied when the remote control 2 is held with a hand by a user, the detection of a pressure with the pressure sensor 28 means that the remote control 2 is held with a hand by a user.

When pressure has not been detected by the pressure sensor 28 in step S201 (i.e., NO in S201), the control section 21 waits for detection of vibration with the vibration sensor 29 (S202). When the vibration sensor 29 detects vibration of a prescribed value or more, the vibration sensor 29 inputs a signal corresponding to the detection of the vibration to the control section 21, and in step S202, the control section 21 determines that the vibration sensor 29 has detected vibration when the signal is input from the vibration sensor 29. The detection of vibration with the vibration sensor 29 means that a user performs an operation on the remote control 2 by, for example, lifting, tapping or shaking the remote control 2. When vibration has not been detected (i.e., NO in S202), the control section 21 waits for acceptance of an arbitrary operation performed by a user in the operation section 22 by, for example, touching the touch panel or pushing any input button of the input button section 222 (S203). When operation has not been accepted in the operation section 22 (i.e., NO in S203), the control section 21 returns the processing to step S201. When pressure has been detected in step S201 (i.e., YES in S201), when vibration has been detected in step S202 (i.e., YES in S202) or when an operation has been accepted in step S203 (i.e., YES in S203), the control section 21 turns on the image display of the display section 27 by restoring the power to be supplied to the display section 27 from the power source not shown (S204). Through the procedure of step S204, the image display in the display section 27 is resumed. The procedures in steps S201 through S204 correspond to waiting means of this invention. Next, the control section 21 causes the transmitting section 25 to transmit, to the television set 1, a request for the state information corresponding to the state of the television set 1 (S205).

The television set 1 receives the request for the state information in the receiving section 115 (S206), and the control section 101 of the television set 1 detects the state of the television set 1, that is, what kind of image is being displayed and detects the content of processing executed in the external equipment 3 connected to the interface section 112 (S207). Next, the control section 101 causes the transmitting section 114 to transmit, to the remote control 2, the state information corresponding to the detected state of the television set 1 and the external equipment information corresponding to the detected content of the processing executed in the external equipment 3 (S208).

The remote control 2 receives the state information and the external equipment information having been transmitted from the television set 1 in the receiving section 24 (S209). The control section 21 displays the state of the television set 1 or the external equipment 3 on the basis of the received state information and external equipment information, and executes the processing for displaying, in the display section 27, a screen for accepting an operation for controlling the television set 1 or the external equipment 3 in accordance with the state of the television set 1 (S210). The screen displayed in step S210 is a screen similar to that displayed in step S105. Next, the control section 21 waits for acceptance of an operation, performed by a user in the operation section 22,for controlling the operation of the television set 1 or the external equipment 3(S211). When an operation performed by the user in the operation section 22 has been accepted (i.e., YES in S211), the control section 21 causes the transmitting section 25 to transmit a control signal in accordance with the accepted operation to the television set 1 (S212).

The television set 1 receives the control signal transmitted from the remote control 2 by using the receiving section 115 (S213), and the control section 101 executes the control of the television set 1 or the external equipment 3 in accordance with the received control signal (S214). After completing step S214, the control section 101 returns the processing to step S207. In step S207, the control section 101 detects the state of the television set 1 or the external equipment 3 attained after the control, and the procedures of steps S207 through S210 are executed, so as to display the result of the control in the display section 27 of the remote control 2.

When the operation has not been accepted from the user in step S211 (i.e., NO in S211), the control section 21 measures elapsed time after displaying the screen in the display section 27 in step S210, so as to determine whether or not prescribed time has elapsed after the time point of the display (S215). When the prescribed time has not elapsed (i.e., NO in S215), the control section 21 returns the processing to step S211, so as to continuously wait for an operation. When the prescribed time has elapsed (i.e., YES in S215), the control section 21 executes processing for tuning off the image display of the display section 27 by reducing the power to be supplied to the display section 27 from the power source not shown (S216), and the control section completes the processing.

According to this invention, through the aforementioned procedures, the remote control 2 turns off the display of the display section 27 when the prescribed time has elapsed after the display and transmits a request for the state information to the television set 1 when the pressure sensor 28 detects a pressure, when the vibration sensor 29 detects vibration or when the operation section 22 accepts an arbitrary operation. Since the display of the display section 27 turns off, the remote control 2 can reduce the power consumption in the display section 27. Furthermore, since the remote control 2 transmits a request for the state information when a user performs any operation on the remote control 2 with the display section 2 placed in an off state, for example, when a user holds, lifts, taps or shakes the remote control 2 with a hand or when a user operates the operation section 22, the remote control 2 displays the state of the television set 1 or the external equipment 3 in the display section 27 as demanded by the user. Even when the state of the television set 1 is changed independently of the remote control 2, such as when the channel is changed in accordance with an operation accepted from a user in the operation section 116 or when a program has been completed and a new program has started, the user can grasp the state of the television set 1 by using the remote control 2 if necessary.

As described in detail so far, according to this invention, the television set 1 and the remote control 2 do not always communicate with each other but the state information and the external equipment information are transmitted to the remote control 2 when the operation situation of the television set 1 or the external equipment 3 is changed; therefore, every time the operation situation of the television set 1 or the external equipment 3 is changed, the current state of the television set 1 or the external equipment 3 is displayed in the remote control 2. As a result, according to the control system of this invention, a user can always grasp the state of the television set 1 or the external equipment 3 changing every moment by using the remote control 2 while suppressing the power consumption necessary for the communication. Since a user can grasp the states of the television set 1 and the external equipment 3 by using the remote control 2, the user can perform an appropriate operation in accordance with the situation. Furthermore, according to this invention, the remote control 2 turns off the display section 27 when the prescribed time has elapsed after the display and requests the television set 1 for the state information when a user performs an arbitrary operation on the remote control 2 such as an operation to hold the remote control 2 with a hand; therefore, the user can grasp the state of the television set 1 or the external equipment 3 by using the remote control 2 when necessary while suppressing the power consumption in the remote control 2.

Incidentally, although the remote control 2 turns off the display section 27 when the prescribed time has elapsed after the display in this embodiment, the whole remote control 2 may be placed in a power-saving state instead in this invention by reducing the power to be supplied not only to the display section 27 but also to the respective sections of the remote control 2. Even in the power-saving state, the remote control 2 is supplied with power sufficient for keeping a function to accept an operation performed by a user in the operation section 22, the pressure sensor 28 and the vibration sensor 29. When the whole remote control 2 is thus placed in a power-saving state, the power consumption in the remote control 2 can be further reduced.

Although the vibration sensor 29 and the pressure sensor 28 are described respectively as examples of the variation sensor and the contact sensor in this embodiment, the variation sensor and the contact sensor may employ other forms. The variation sensor may be, for example, an acceleration sensor for detecting acceleration caused in the remote control 2, an inclination sensor for detecting inclination of the remote control 2 or a gyro sensor for detecting rotation of the remote control 2. When any of these variation sensors is used, the remote control 2 can accept an operation performed by a user by, for example, holding, tapping or shaking the remote control 2. Furthermore, the contact sensor may be, for example, a sensor for detecting a contact by using a resistive film or a sensor for detecting a contact by measuring capacitance. When any of these contact sensors is used, the remote control 2 can accept an operation performed by a user by, for example, holding or touching the remote control 2 with his/her hand.

Incidentally, broadcast signals of a digital broadcast are received by the tuner section 102 in this embodiment; however, the television set 1 of this invention may include an analog tuner for receiving broadcast signals of an analog broadcast. Furthermore, the television set 1 corresponds to the image display unit of this invention in this embodiment, which does not limit the invention, and the image display unit of this invention may be a form not having a function to receive a broadcast by itself.

## Claims

1. A control system comprising: an image display unit; and a remote control device for accepting an operation for controlling an operation of the image display unit and for transmitting a control signal to the image display unit, the image display unit and the remote control device being capable of performing two-way communications,
wherein the image display unit includes:
detecting means for detecting what kind of image is being displayed; and
means for transmitting state information corresponding to the state thereof to the remote control device when the state detected by the detecting means is changed,
the remote control device includes:
a display section; and
means for displaying, when the state information is received from the image display unit, the state of the image display unit corresponding to the received state information in the display section.

2. The control system according to claim 1,
wherein the remote control device further includes:
means for reducing power supplied to the display section of the remote control device in accordance with elapsed time;
waiting means for waiting for an arbitrary operation in a condition where the power supplied to the display section is reduced;
means for transmitting, when the waiting means accepts the arbitrary operation, a request for state information corresponding to a state of the image display unit to the image display unit; and
means for restoring the power supplied to the display section;
wherein the image display unit further includes:
means for transmitting, when the request for the state information is received from the remote control device, the state information corresponding to the state of the image display unit to the remote control device.

3. The control system according to claim 1 or 2,
wherein the remote control device further includes:
means for displaying, in the display section, an operation screen for accepting an operation in accordance with the state of the image display unit corresponding to the state information received from the image display unit.

4. The control system according to any one of claims 1 to 3,
wherein the image display unit is connectable to external equipment,
wherein the image display unit further includes:
detecting means for detecting a content of processing executed in the connected external equipment; and
means for transmitting, to the remote control device, information corresponding to the content of the processing of the external equipment detected by the detecting means;
wherein the remote control device further includes:
means for displaying, in the display section, the content of the processing of the external equipment corresponding to the information received from the image display unit.

5. The control system according to claim 4,
wherein the remote control device further includes:
means for accepting an operation for controlling an operation of the external equipment;
means for displaying, in the display section, an operation screen for accepting an operation in accordance with the content of the processing of the external equipment corresponding to the information received from the image display unit; and
means for transmitting, to the image display unit, a control signal for controlling the operation of the external equipment in accordance with the accepted operation;
wherein the image display unit further includes:
means for controlling the operation of the external equipment in accordance with the received control signal.

6. An image display unit, capable of performing two-way communications with an external, for receiving a control signal from the external and for controlling an operation thereof in accordance with the received control signal, comprising:
state detecting means for detecting what kind of image is being displayed; and
means for transmitting state information corresponding to the state detected by the state detecting means to the external when the state detected by the state detecting means is changed.

7. The image display unit according to claim 6, further comprising:
means for receiving a request for state information from the external; and
means for transmitting, to the external, state information corresponding to the state detected by the state detecting means when the request for the state information is received.

8. The image display unit according to claim 6 or 7,
wherein the image display unit is connectable to external equipment,
wherein the image display unit further comprises:
detecting means for detecting a content of processing executed in the connected external equipment; and
means for transmitting, to the external, information corresponding to the content of the processing of the external equipment detected by the detecting means.

9. The image display unit according to any one of claims 6 to 8, further comprising:
means for receiving broadcasts; and
means for accepting input of image data from the external,
wherein the state detecting means detects whether or not a obtaining image based on a received broadcast is being displayed, which channel of the broadcasts the displayed image is based on, which program of the broadcasts the displayed image is based on, or whether or not an obtaining image based on externally input data is being displayed.

10. A remote control device, capable of performing two-way communications with an external unit for displaying images, for accepting an operation for controlling an operation of the external unit and for transmitting a control signal to the external unit, comprising:
a display section;
receiving means for receiving state information corresponding to a state of the external unit of what kind of image the external unit is displaying; and
means for displaying, in the display section, the state of the external unit corresponding to the received state information when the receiving means receives the state information.

11. The remote control device according to claim 10, further comprising:
means for reducing power supplied to the display section in accordance with elapsed time;
waiting means for waiting for an arbitrary operation in a condition where the power supplied to the display section is reduced;
means for transmitting a request for state information to the external unit when the waiting means accepts the arbitrary operation; and
means for restoring the power supplied to the display section.

12. The remote control device according to claim 11, further comprising:
a variation sensor for detecting variation thereof;
wherein the waiting means determines that the arbitrary operation is accepted when the variation sensor detects variation of a prescribed amount or more.

13. The remote control device according to claim 11 or 12, further comprising:
a contact sensor for detecting a contact thereto by a user;
wherein the waiting means determines that the arbitrary operation is accepted when the contact sensor detects a contact.

14. The remote control device according to any one of claims 10 to 13, further comprising:
means for displaying, in the display section, an operation screen for accepting an operation in accordance with the state of the external unit corresponding to the received state information.

15. The remote control device according to any one of claims 10 to 14, further comprising:
means for receiving, from the external unit, information corresponding to a content of processing executed in a second equipment connected to the external unit; and
means for displaying, in the display section, the content of the processing of the second equipment corresponding to the received information.

16. The remote control device according to claim 15, further comprising:
means for accepting an operation for controlling an operation of the second equipment;
means for displaying, in the display section, an operation screen for accepting an operation in accordance with the content of the processing of the second equipment corresponding to the information received from the external unit; and
means for transmitting, to the external unit, a control signal for controlling the operation of the second equipment in accordance with the accepted operation.
